# EUROPÄISCHE PATENTSCHRIFT

(11) **EP 2 841 479 B1**
(45) Veröffentlichungstag und Bekanntmachung des Hinweises auf die Patenterteilung: **24.06.2020**
(21) Anmeldenummer: 13719770.3
(22) Anmeldetag: 22.04.2013
(51) Int. Cl.: C08G 18/38, C08G 18/72, C08G 18/73, C08G 18/75, C08G 18/78, C08G 18/79, G02B 1/04, C08L 75/04

(54) **LICHTECHTE POLYURETHANZUSAMMENSETZUNGEN**
LIGHT-RESISTANT POLYURETHANE COMPOUNDS
COMPOSITIONS STABLES À LA LUMIÈRE DE POLYURÉTHANE

(30) Priorität: 23.04.2012 EP 12165170
(43) Veröffentlichungstag der Anmeldung: 04.03.2015
(73) Patentinhaber: Covestro Deutschland AG, 51373 Leverkusen (DE)
(72) Erfinder: GRESZTA-FRANZ, Dorota, 42659 Solingen (DE); KRAUSE, Jens, 51375 Leverkusen (DE); LAAS, Hans Josef, 51519 Odenthal (DE)
(74) Vertreter: Gille Hrabal
(86) Internationale Anmeldenummer: PCT/EP2013/058260
(87) Internationale Veröffentlichungsnummer: WO 2013/160227

(56) Entgegenhaltungen:
- EP-A1- 1 657 267
- WO-A1-02/098942
- WO-A1-2009/006034
- DE-A1- 19 914 884
- US-A1- 2006 057 394

## Beschreibung

Die Erfindung betrifft Zusammensetzungen, welche zu lichtechten Polythiourethanen gehärtet werden können und insbesondere zur Herstellung optischer Linsen geeignet sind.

Transparente Kunststoffe ersetzen heute in vielen Bereichen Glas bei der Herstellung optischer Bauteile. Auch bei Brillengläsern können polymere Werkstoffe ihre Vorteile hinsichtlich geringen Gewichts, höherer Bruchfestigkeit und leichter Verarbeitbarkeit ausspielen, weshalb sie das traditionell verwendete Mineralglas mehr und mehr substituieren.

Die industrielle Fertigung organischer Brillengläser aus duromeren Kunststoffen erfolgt nach einem speziellen Gießverfahren, bei dem flüssige Reaktionsgemische mit Additiven, wie z. B. UV-Absorbern, versetzt, bei Temperaturen möglichst weit unterhalb ihrer Aushärtetemperatur in gläserne Gießformen eingefüllt und anschließend in einem exakt temperierten Prozess über viele Stunden ausgehärtet werden.

Transparente Polymere mit hohem Brechungsindex im Bereich von 1,60 sind zur Herstellung von Brillengläsern von besonderem Interesse. Solche Materialien ermöglichen es, auch zur Korrektur stärkerer Fehlsichtigkeiten dünne und damit ästhetisch wirkende, leichte Gläser zu fertigen.

Hoch lichtbrechende Polyurethane und Polythiourethane, die als Linsenmaterialien geeignet sind, wurden bereits vielfach beschrieben.

Aus US-A 4680369 und US-A 4689387 sind beispielsweise Polyurethane bzw. Polythiourethane bekannt, bei deren Herstellung zur Erzielung besonders hoher Brechungsindices spezielle Schwefel enthaltende Polyole bzw. mercaptofunktionelle aliphatische Verbindungen mit monomeren araliphatischen Diisocyanaten, wie z. B. 1,3-Bis(isocyanatomethyl)benzol (m-Xylylendiisocyanat, m-XDI), 1,4-Bis(isocyanatomethyl)benzol (p-Xylylendiisocyanat, p-XDI), 1,3-Bis(2-isocyanatopropan-2-yl)benzol oder (m-Tetramethylxylylendiisocyanat, m-TMXDI) kombiniert werden.

Monomere araliphatische Diisocyanate, wie m- und p-XDI oder m-TMXDI, werden auch in einer Vielzahl weiterer Veröffentlichungen, wie z. B. der EP-A 0 235 743, EP-A 0 268 896, EP-A 0 271 839, EP-A 0 408 459, EP-A 0 506 315, EP-A 0 586 091 und EP-A 0 803 743, als die bevorzugten Vernetzerkomponenten für Polyole und/oder Polythiole zur Herstellung hochbrechender Linsenmaterialien genannt.

Diese Diisocyanate führen aufgrund ihrer aromatischen Strukturelemente zwar zu Polyurethanen bzw. Polythiourethanen mit den gewünscht hohen Brechungsindices im Bereich von ≥ 1,60, gleichzeitig nimmt aber auch die optische Dispersion deutlich zu, so dass in der Regel Abbe-Zahlen von unter 40 gefunden werden. Für optische Anwendungen höchster Qualität sind Materialien auf Basis araliphatische Diisocyanate daher weniger gut geeignet.

Deutlich bessere Ergebnisse liefern in dieser Hinsicht Kombinationen aliphatischer bzw. cycloaliphatischer Polyisocyanate mit Polythiolen.

Die EP-A 0 802 431 beschreibt beispielsweise ein spezielles Verfahren zur Herstellung von Polyurethanlinsen, bei dem Polythiol-Gemische mit einer Reihe unterschiedlicher Polyisocyanatkomponenten, darunter sowohl araliphatische als auch cycloaliphatische, umgesetzt werden. Die Ausführungsbeispiele dieser Veröffentlichung zeigen, dass unter Verwendung des araliphatischen Diisocyanates m-XDI Linsen mit sehr hohen Brechungsindices von 1,64 bzw. 1,65 aber sehr niedrigen Abbe-Zahlen von 34 bzw. 35 erhalten werden, während die Verwendung der cycloaliphatischen Diisocyanate Bis(isocyanatomethyl)cyclohexan (H6XDI) oder 1-Isocyanato-3,3,5-trimethyl-5-isocyanatomethylcyclohexan (Isophorondiisocyanat, IPDI) transparente Polythiourethane mit Brechungsindices von 1,60 und hohen Abbe-Zahlen von 42 bzw. 43 liefert.

Die besondere Eignung cycloaliphatischer Polyisocyanate zur Herstellung transparenter hoch lichtbrechender Polyurethane und Polythiourethane geringer Dispersion wird durch eine Reihe weiterer Publikationen belegt (z. B. EP-A 0 422 836, EP-A 1 670 852, EP-A 2 065 415, WO 2010/095837, WO 2010/128770 oder WO 2010/148424).

All diesen Verfahren zur Herstellung transparenter Polyurethane bzw. Polythiourethane gemeinsam ist allerdings der Nachteil, dass als Polyisocyanatkomponenten ausschließlich monomere Diisocyanate eingesetzt werden. Die Verwendung lediglich difunktioneller Vernetzermoleküle führt aber zu einer vergleichsweise niedrigen Vernetzungsdichte im ausgehärteten Polymer und damit zu nur mäßigen mechanischen und thermischen Festigkeiten, beispielsweise einer geringen Zugfestigkeit sowie einer relativ niedrigen Glasübergangstemperatur (Tg) und Wärmeformbeständigkeit (HDT).

Es wurden auch bereits Versuche unternommen, durch zumindest anteilige Verwendung höherfunktioneller Polyisocyanatkomponenten die Vernetzungsdichte zu erhöhen, um so die genannten Nachteile der reinen Diisocyanatvernetzung zu überwinden.

So beschreibt die EP-A 1 637 553 ein Verfahren zur Herstellung von Polythiourethanen mit Brechungsindices von ≥ 1,60 und Abbe-Zahlen im Bereich von 40 aus speziellen Polythiolen mit Dithiangrundgerüst, bei dem linearaliphatische Polyisocyanuratpolyisocyanate, beispielsweise solche auf Basis von Hexamethylendiisocyanat (HDI), gegebenenfalls im Gemisch mit weiteren cycloaliphatischen Diisocyanaten als Vernetzerkomponenten eingesetzt werden. Die genannten Polythiolbausteine sind kommerziell allerdings nicht verfügbar.

Nach EP-A 1 878 758 lassen sich durch Umsetzung spezieller Polyisocyanatkombinationen, enthaltend bicyclische Diisocyanate, wie z. B. 2,5(6)-Bis(isocyanatomethyl)-bicyclo[2.2.1]heptan, (Norbornandiisocyanat, NBDI), und/oder H6XDI und gleichzeitig linearaliphatische Diisocyanate, wie z. B. HDI, und/oder Biureten bzw. Trimerisaten solcher linearaliphatischer Diisocyanate, mit mindestens einem, gegebenenfalls Polysulfidstrukturen enthaltenden Polythiol und mindestens einem mindestens difunktionellen Polyalkohol und/oder Mercaptoalkohol hoch lichtbrechende Linsenmaterialien geringer Dispersion mit guter Einfärbbarkeit und Schlagfestigkeit herstellen. Bei den als Bestandteil in der Vernetzerkomponente einzusetzenden bicyclischen Diisocyanaten, wie NBDI, aber auch den Isomeren des H6XDI handelt es sich allerdings Rohstoffe mit Spezialitätencharakter, die entsprechend teuer und nicht in beliebigen Mengen großtechnisch verfügbar sind.

Auch wenn in der Literatur in Bezug auf Polythiourethan-Überzugsmittel, wie beispielsweise in der DE 199 14 884 A1, und auf Poly(thio)urethan-Beschichtungsmittel, wie beispielsweise in der WO 02/0989412 A1, der WO 2009/006034 A1 und der US 2006/0057394 A1 die Verwendung von Gemischen unterschiedlicher Diisocyanate, insbesondere von Präpolymeren unterschiedlicher Diisocyanate bereits untersucht wurden, kann eine Eignung solcher Isocyanatsysteme nicht ohne Weiteres auf Formkörper übertragen werden. Insbesondere kann aus dieser Literatur nicht abgeleitet werden, ob diese Systeme auch die genannten hohen Anforderungen in optischen Anwendungen von Formkörpern erfüllen.

Es sind bisher keine geeigneten Polymere mit hohem Brechungsindex bekannt, die alle oben genannten Anforderungen an ein industriell zu verarbeitendes Material zur Herstellung von Brillengläsern erfüllen.

Es bestand daher ein großes Interesse daran, einen Kunststoff bereitzustellen, welcher insbesondere die Vorteile von Kunststoffen gegenüber Mineralglas aufweist, bei nur geringer optischer Dispersion einen Brechungsindex im Bereich von 1,60 aufweist und gleichzeitig über sehr gute mechanische und thermische Eigenschaften verfügt. Dabei soll der Kunststoff insbesondere eine hohe Schlagfestigkeit und Wärmeformbeständigkeit aufweisen. Außerdem sollten die erhaltenen Kunststoffe insbesondere lichtecht und vergilbungsstabil sein. Des Weiteren sollte der Kunststoff gegebenenfalls durch Additivierung bzw. Zugabe weiterer Hilfs- und/oder Zusatzmittel UV-Strahlung insbesondere einer Wellenlänge von < 400 nm vollständig blockieren können. Dadurch sollten diese transparenten Kunststoffe insbesondere für den Gebrauch in optischen Anwendungen wie optischen Linsen geeignet sein. Der Kunststoff sollte somit insbesondere geeignet sein für die Verwendung als Brillenglas. Darüber hinaus sollten die Rohstoffe für diesen Kunststoff in technischem Maßstab gut zugänglich sein. Weiter sollten diese Rohstoffe bevorzugt ausreichend niedrigviskos sein, um sie in einem Gießprozess verarbeiten zu können. Damit würde ein solcher Kunststoff insbesondere in den in der Brillenglasindustrie etablierten Gießverfahren verwendet werden können.

Gelöst werden diese Aufgaben durch die Bereitstellung der in den Ansprüchen definierten Zusammensetzungen, ihrer Verwendung sowie dem Verfahren zur Herstellung transparenter Materialien.

Die erfindungsgemäße Zusammensetzung zur Verwendung zur Herstellung einer optischen Linse enthält
A) 10 bis 50 Gew.-% mindestens eines Polyisocyanates a-1) auf Basis von Hexamethylendiisocyanat, enthaltend mindestens ein oligomeres Polyisocyanat auf Basis von Hexamethylendiisocyanat und wahlweise monomeres Hexamethylendiisocyanat
   und
   50 bis 90 Gew.-% mindestens eines Polyisocyanates a-2) auf Basis von Isophorondiisocyanat, enthaltend mindestens ein oligomeres Polyisocyanat auf Basis von Isophorondiisocyanat und wahlweise monomeres Isophorondiisocyanat,
   mit der Maßgabe, dass
   das Polyisocyanat a-1) monomeres Hexamethylendiisocyanat enthält, oder
   das Polyisocyanat a-2) monomeres Isophorondiisocyanat enthält, oder
   das Polyisocyanat a-1) monomeres Hexamethylendiisocyanat enthält und das Polyisocyanat a-2) monomeres Isophorondiisocyanat enthält wobei die %-Angaben auf die Summe der Komponenten a-1) und a-2) bezogen sind,
B) mindestens eine Schwefel enthaltende Komponente
   sowie gegebenenfalls
C) ein oder mehrere Hilfs- und/oder Zusatzmittel.

Die Erfindung umfasst außerdem eine Zusammensetzung, enthaltend
A) 10 bis 50 Gew.-% mindestens eines oligomeren Polyisocyanates a-1') auf Basis von Hexamethylendiisocyanat,
   und
   50 bis 90 Gew.-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat, worin, bezogen auf die Masse, die Menge des monomeren Isophorondiisocyanates größer als die Menge des oligomeren Polyisocyanates auf Basis von Isophorondiisocyanat ist,
   wobei die %-Angaben auf die Summe der Komponenten a-1') und a-2) bezogen sind,
B) mindestens eine Schwefel enthaltende Komponente
   sowie gegebenenfalls
C) ein oder mehrere Hilfs- und/oder Zusatzmittel.

Es hat sich überraschenderweise herausgestellt, dass durch Verwendung genau definierter Gemische aus mindestens einem Polyisocyanat auf Basis von Hexamethylendiisocyanat (HDI), enthaltend mindestens ein oligomeres Polyisocyanat auf Basis von HDI und wahlweise monomeres HDI, und einer Polyisocyanatkomponente auf Basis von Isophorondiisocyanat (IPDI), enthaltend mindestens ein oligomeres Polyisocyanat auf Basis von IPDI und wahlweise monomeres IPDI, wobei das Polyisocyanat a-1) / a-1') monomeres HDI und/oder das Polyisocyanat a-2) monomeres IPDI enthält, in Kombination mit einer Schwefel enthaltenden Komponente lichtechte, transparente Kunststoffe erhalten werden können, welche die Vorteile von Kunststoffen gegenüber Mineralglas aufweisen, bei nur geringer optischer Dispersion einen Brechungsindex im Bereich von 1,60 haben und gleichzeitig über sehr gute mechanische und thermische Eigenschaften verfügen. Diese Kunststoffe weisen im Vergleich zu Glas insbesondere eine geringere Dichte, eine höhere Bruchfestigkeit sowie eine leichtere Verarbeitbarkeit auf. Sie weisen insbesondere einen Brechungsindex im Bereich von 1,60 auf. Ebenso können hohe Abbe-Zahlen realisiert werden. Die Kunststoffe weisen des Weiteren insbesondere eine sehr hohe Wärmeformbeständigkeit auf. Außerdem sind die erhaltenen Kunststoffe lichtecht und vergilbungsstabil. Ebenso ist der erhaltene Kunststoff durch Additivierung bzw. Zugabe weiterer Hilfs- und/oder Zusatzmittel geeignet, UV-Strahlung insbesondere einer Wellenlänge von < 400 nm vollständig blockieren zu können.

Diese optischen, mechanischen und thermischen Eigenschaften begründen, dass der erfindungsgemäße Kunststoff für den Gebrauch in optischen Anwendungen wie optischen Linsen geeignet ist. Insbesondere ist der Kunststoff für die Verwendung als Brillenglas geeignet.

Gleichzeitig weisen die Ausgangskomponenten eine niedrige Viskosität auf, so dass die erfindungsgemäße Zusammensetzung in einem Gießprozess angewendet werden kann. Insbesondere die Anwendung dieser Zusammensetzung in denen in der Brillenglasindustrie etablierten Gießverfahren kann bewerkstelligt werden.

### Komponente A)

Die Komponente A) der erfindungsgemäßen Zusammensetzung umfasst 10 bis 50 Gew.-%, bevorzugt 10 bis 45 Gew.-%, bevorzugter 15 bis 35 Gew.-%, noch bevorzugter 20 bis 30 Gew.-% mindestens eines Polyisocyanates a-1) / a-1') auf Basis von HDI, enthaltend mindestens ein oligomeres Polyisocyanat auf Basis von HDI und wahlweise monomeres HDI, und 50 bis 90 Gew.-%, bevorzugt 55 bis 90 Gew.-%, bevorzugter 65 bis 85 Gew.-%, noch bevorzugter 70 bis 80 Gew.-% mindestens eines Polyisocyanates a-2) auf Basis von IPDI, enthaltend mindestens ein oligomeres Polyisocyanat auf Basis von IPDI und wahlweise monomeres IPDI, mit der Maßgabe, dass das Polyisocyanat a-1) / a-1') monomeres Hexamethylendiisocyanat enthält, oder das Polyisocyanat a-2) monomeres Isophorondiisocyanat enthält, oder das Polyisocyanat a-1) / a-1') monomeres Hexamethylendiisocyanat enthält und das Polyisocyanat a-2) monomeres Isophorondiisocyanat enthält und wobei die %-Angaben auf die Summe der Komponenten a-1) / a-1') und a-2) bezogen sind.

Unter dem Begriff Polyisocyanat wird im Allgemeinen eine chemische Verbindung verstanden, welche zwei oder mehr Isocyanatgruppen aufweist. Daher werden auch Diisocyanate wie HDI oder IPDI gemeinhin als Polyisocyanate bezeichnet, da sie mehr als eine Isocyanatgruppe tragen. Auf dem Gebiet der aliphatischen bzw. cycloaliphatischen Polyisocyanate werden jedoch im Allgemeinen monomere Diisocyanate wie HDI und IPDI noch nicht als Polyisocyanate bezeichnet, sondern erst die daraus mit Hilfe geeigneter Modifizierungsreaktionen, wie z. B. Trimerisierung oder Biuretisierung, hergestellten höhermolekularen oligomeren Polyisocyanate. Danach stellen HDI und IPDI die Ausgangsdiisocyanate zur Herstellung der entsprechenden Polyisocyanate dar. Die vorliegende Patentanmeldung verwendet den Begriff Polyisocyanat daher insbesondere zur Bezeichnung eines oligomeren Polyisocyanates.

Oligomere Polyisocyanate sind insbesondere solche Polyisocyanate, in welchen mindestens zwei im Allgemeinen gleiche Diisocyanat-Einheiten unter Umsetzung eines Teils der Isocyanatgruppen gegebenenfalls unter Zusatz von beispielsweise ein- oder mehrwertigen Alkoholen, miteinander verbunden werden. Besonders bevorzugt handelt es sich bei oligomeren Polyisocyanaten um Dimere, Trimere oder Mischungen von Dimeren und Trimeren eines Diisocyanates. Dies bedeutet insbesondere, dass die oligomeren Polyisocyanate eine größere Molmasse aufweisen als die entsprechenden Diisocyanate. Ein oligomeres Polyisocyanat auf Basis von HDI weist somit bevorzugt eine höhere Molmasse als 168,20 g/mol auf. Ein oligomeres Polyisocyanat auf Basis von IPDI weist bevorzugt eine höhere Molmasse als 222,29 g/mol auf. Im Sinne der vorliegenden Erfindung ist es besonders bevorzugt, dass die oligomeren Polyisocyanate erhalten werden, indem ausschließlich ein Diisocyanat einer Sorte (d. h. entweder ausschließlich HDI oder ausschließlich IPDI) als Diisocyanat-Einheit umgesetzt wird. Dabei ist es ebenso bevorzugt, dass die oligomeren Polyisocyanate keine Präpolymere sind. Dies bedeutet insbesondere, dass bevorzugt die Molmasse des oligomeren Polyisocyanates oder Polydiisocyanates erhalten durch die Umsetzung ausschließlich einer Diisocyanatsorte als Diisocyanat-Einheit eine Molmasse von unter 1500 g/mol aufweist.

Abhängig von der Art der verwendeten Reaktionsbedingungen können dabei unterschiedliche Verknüpfungen der Diisocyanat-Einheiten auftreten. Weiterhin schließen die oligomeren Polyisocyanate auch Umsetzungsprodukte von Diisocyanaten mit bevorzugt niedermolekularen Polyolen ein (Urethane). Solche Polyole weisen bevorzugt einen Molekulargewichtsbereich von 62 bis 400 g/mol auf.

Bevorzugt werden dabei Uretdion-, Isocyanurat-, Iminooxadiazindion-, Urethan-, Allophanat-, Biuret- und/oder Oxadiazintriongruppen gebildet. Im Folgenden werden oligomere Polyisocyanate, welche mindestens eine dieser genannten Gruppen aufweisen, auch teilweise als "Derivate" des entsprechenden Diisocyanates bezeichnet.

Im Allgemeinen fallen die oligomeren Polyisocyanate bei der Synthese nicht in Form definierter Verbindungen an, sondern als Mischungen verschiedener Oligomere, die eine Molekulargewichtsverteilung aufweisen. Die oligomeren Polyisocyanate schließen insbesondere die folgenden Strukturtypen ein (siehe dazu auch: Nachrichten aus der Chemie, 55, 380-384, 2007): 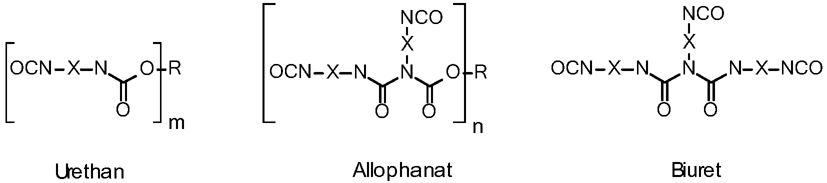 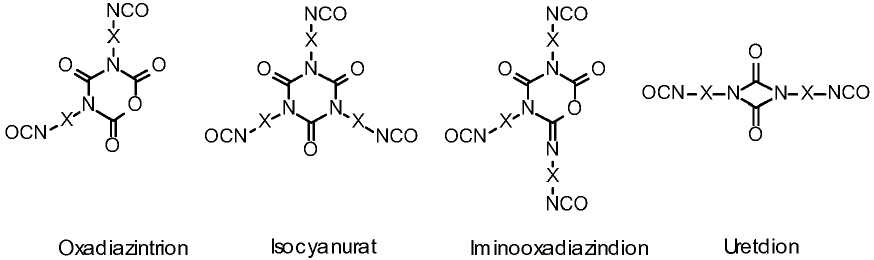 wobei X insbesondere die folgenden Bedeutungen haben kann: 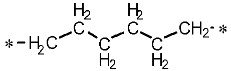 , wenn es sich um ein oligomeres Polyisocyanat auf Basis von HDI handelt oder 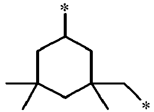
, wenn es sich um ein oligomeres Polyisocyanat auf Basis von IPDI handelt;
R ein beliebiger organischer Rest sein kann,
n eine ganze Zahl zwischen 1 und 10, bevorzugt 2 oder 3 ist,
und m eine ganze Zahl zwischen 2 und 10, bevorzugt 2 oder 3 ist,
und Mischungen dieser Strukturtypen.

Die oligomeren Polyisocyanate weisen mindestens zwei, besonders bevorzugt mindestens drei Isocyanatgruppen pro Molekül auf (NCO-Funktionalität).

Die Erfindung umfasst außerdem eine Zusammensetzung, worin die Komponente A) 10 bis 50 Gew.-%, bevorzugt 10 bis 45 Gew.-%, bevorzugter 15 bis 35 Gew.-%, noch bevorzugter 20 bis 30 Gew.-% mindestens eines oligomeren Polyisocyanates a-1') auf Basis von Hexamethylendiisocyanat und 50 bis 90 Gew.-%, bevorzugt 55 bis 90 Gew.-%, bevorzugter 65 bis 85 Gew.-%, noch bevorzugter 70 bis 80 Gew.-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat umfasst.

### Oligomere Polyisocyanatkomponente a-1) / a-1')

Die Polyisocyanatkomponente a-1) / a-1') auf Basis von HDI enthält mindestens ein oligomeres Polyisocyanat auf Basis von HDI und wahlweise monomeres HDI.

Unter dem Begriff "enthalten" wird in Bezug auf die Polyisocyanatkomponente a-1) / a-1') auf Basis von HDI bevorzugt "im Wesentlichen bestehen aus" verstanden. Dies bedeutet, dass die Polyisocyanatkomponente a-1) / a-1') auf Basis von HDI besonders bevorzugt im Wesentlichen aus monomerem HDI und mindestens einem oligomeren Polyisocyanat auf Basis von HDI besteht. Dabei kann die Polyisocyanatkomponente a-1) / a-1') auf Basis von HDI gängige Verunreinigungen, die beispielsweise bei der Herstellung von HDI und/oder bei der Herstellung von oligomeren Polyisocyanat auf Basis von HDI häufig auftreten, zu einem geringen Anteil aufweisen.

In einer bevorzugten Ausführungsform der vorliegenden Erfindung ist die Polyisocyanatkomponente a-1) / a-1') auf Basis von HDI ein oligomeres Polyisocyanat auf Basis von HDI. Dies bedeutet, dass sie in dieser Ausführungsform bevorzugt einen Gehalt an monomerem HDI von weniger als 0,5 Gew.-% bezogen auf die gesamte Polyisocyanatkomponente a-1) / a-1') auf Basis von HDI aufweist.

Bei den oligomeren Polyisocyanaten auf Basis von HDI handelt es sich vorzugsweise um die an sich bekannten Derivate des HDIs, welche ausgewählt werden aus der Gruppe, bestehend aus Uretdion-, Isocyanurat-, Iminooxadiazindion-, Urethan-, Allophanat-, Biuret-, Oxadiazintriongruppen enthaltende Derivate und Mischungen solcher Derivate. Diese Derivate und ihre Herstellungsverfahren sind beispielhaft in Laas et al., J. Prakt. Chem. 336, 1994, 185-200, der DE-A 1 670 666, DE-A 3 700 209, DE-A 3 900 053, EP-A 0 330 966, EP-A 0 336 205, EP-A 0 339 396 und EP-A 0 798 299 beschrieben. Bevorzugt handelt es sich bei den oligomeren Polyisocyanaten auf Basis von HDI um Derivate des HDIs, welche Biuret-, Isocyanurat- und/oder Iminooxadiazindionstrukturen aufweisen. Besonders bevorzugt handelt es sich bei den oligomeren Polyisocyanaten auf Basis von HDI um Derivate des HDIs, welche Isocyanuratgruppen- und/oder Iminooxadiazindiongruppen aufweisen.

Das zur Herstellung der oligomeren Polyisocyanate eingesetzte HDI wird bevorzugt durch Phosgenierung von Hexamethylendiamin hergestellt. Zur Herstellung der oligomeren Polyisocyanate kann aber auch HDI eingesetzt werden, das durch thermische Spaltung der Urethanbindungen von auf phosgenfreiem Weg erhaltenen Diurethanen des HDIs hergestellt wurde.

Unabhängig von der oben geschilderten Art der gewählten Oligomerisierungsreaktion kann somit in dieser Ausführungsform bei der Herstellung der erfindungsgemäß eingesetzten Polyisocyanatkomponenten a-1) / a-1') auf Basis von HDI wie folgt vorgegangen werden:
Herstellung 1: Nach erfolgter Oligomerisierung kann vorzugsweise auf die Abtrennung des nicht umgesetzten monomeren HDIs verzichtet werden. Auf diese Weise ist es möglich, das Polyisocyanat a-1) / a-1'), enthaltend mindestens ein oligomeres Polyisocyanat auf Basis von HDI und monomeres HDI zu erhalten. Hierbei handelt es sich um eine bevorzugte Vorgehensweise. Diese ermöglicht es, die Polyisocyanatkomponente a-1) / a-1') auf Basis von HDI in einem Verfahrensschritt herzustellen.
Herstellung 2: In einer alternativen Variante erfolgt die Herstellung der Polyisocyanatkomponente a-1) / a-1') auf Basis von HDI, indem zunächst mindestens ein oligomeres Polyisocyanat auf Basis von HDI vorzugsweise nach den oben beschriebenen bekannten Verfahren hergestellt wird. Das so erhaltene mindestens eine oligomere Polyisocyanat auf Basis von HDI wird nach gängigen Verfahren aufgereinigt, so dass es im Wesentlichen monomerarm ist. Es kann in monomerem HDI aufgelöst werden, um die Polyisocyanatkomponente a-1) / a-1') auf Basis von HDI zu erhalten. Diese Vorgehensweise ist jedoch nicht bevorzugt, da sie aufwendiger ist als die zuvor beschriebene Vorgehensweise.

Die Polyisocyanatkomponente a-1) / a-1') auf Basis von HDI weist bei 23°C bevorzugt eine Viskosität von 100 bis 3 500 mPa·s, bevorzugt von 600 bis 3 000 mPa·s, besonders bevorzugt von 600 bis 1 500 mPa·s auf. Der Gehalt an Isocyanatgruppen der Polyisocyanatkomponente a-1) / a-1') auf Basis von HDI beträgt bevorzugt von 20 bis 24 Gew.-%, besonders bevorzugt von 21 bis 24 Gew.-%, ganz besonders bevorzugt 22 bis 24 Gew.-%. Die Polyisocyanatkomponente a-1) / a-1') auf Basis von HDI weist eine durchschnittliche Isocyanat-Funktionalität pro Molekül von mindestens 2,0 auf.

Besonders bevorzugt handelt es sich bei den oligomeren Polyisocyanaten der Komponente a-1) / a-1') um ein Derivat des HDIs, welches Isocyanuratgruppen- und/oder Iminooxadiazindiongruppen aufweist, mit einer Viskosität bei 23°C von 600 bis 1.500 mPa·s und einem Gehalt an Isocyanatgruppen von 22 bis 24 Gew.-%.

### Polyisocyanatkomponente a-2)

Die Polyisocyanate der Komponente a-2) auf Basis von IPDI enthalten mindestens ein oligomeres Polyisocyanat auf Basis von IPDI und wahlweise monomeres IPDI.

Unter dem Begriff "enthalten" wird in Bezug auf die Polyisocyanatkomponente a-2) auf Basis von IPDI bevorzugt "im Wesentlichen bestehen aus" verstanden. Dies bedeutet, dass die Polyisocyanatkomponente a-2) auf Basis von IPDI besonders bevorzugt im Wesentlichen aus monomerem IPDI und mindestens einem oligomeren Polyisocyanat auf Basis von IPDI besteht. Dabei kann die Polyisocyanatkomponente a-2) auf Basis von IPDI gängige Verunreinigungen, die beispielsweise bei der Herstellung von IPDI und/oder bei der Herstellung von oligomeren Polyisocyanat auf Basis von IPDI häufig auftreten, zu einem geringen Anteil aufweisen.

Bei dem oligomeren Polyisocyanat auf Basis von IPDI handelt es sich vorzugsweise um ein Derivat, welches ausgewählt wird aus der Gruppe, bestehend aus Derivaten mit Biuret-, Isocyanuratstrukturen und Mischungen daraus.

Die Herstellung dieser Polyisocyanatkomponenten a-2) auf Basis von IPDI kann insbesondere ausgehend von monomerem IPDI mit Hilfe an sich bekannter Verfahren zur Biuretisierung und/oder Trimerisierung durch Umsetzung eines Teils der ursprünglich im IPDI vorhandenen Isocyanatgruppen unter Bildung oligomerer Polyisocyanatmoleküle erfolgen.

Geeignet sind beispielsweise die üblichen Verfahren zur katalytischen Trimerisierung von Isocyanaten unter Bildung von Isocyanuratstrukturen oder zur Biuretisierung von Diisocyanaten, wie sie z. B. in Laas et al., J. Prakt. Chem. 336, 1994, 185-200 beispielhaft beschrieben sind. Weitere Beschreibungen geeigneter IPDI-Polyisocyanate finden sich z. B. auch in der EP-A 0 003 765, EP-A 0 017 998 und DE-A 2 644 684.

Das zur Herstellung der Polyisocyanatkomponenten a-2) auf Basis von IPDI eingesetzte IPDI wird bevorzugt durch Phosgenierung von Isophorondiamin hergestellt. Zur Herstellung der Polyisocyanatkomponenten a-2) auf Basis von IPDI kann aber auch IPDI eingesetzt werden, das durch thermische Spaltung der Urethanbindungen von auf phosgenfreiem Weg erhaltenen Diurethanen des IPDls hergestellt wurde. Unabhängig von der oben geschilderten Art der gewählten Oligomerisierungsreaktion (Trimerisierung und/oder Biuretisierung) kann somit in dieser Ausführungsform bei der Herstellung der erfindungsgemäß eingesetzten Polyisocyanatkomponenten a-2) auf Basis von IPDI wie folgt vorgegangen werden:
Herstellung 1: Anders als beispielsweise bei der Herstellung von Lackpolyisocyanaten üblich und in der vorstehend zitierten Patentliteratur beschrieben, kann nach erfolgter Oligomerisierung vorzugsweise auf die Abtrennung des nicht umgesetzten monomeren IPDls verzichtet werden. Auf diese Weise ist es möglich, klare, im Wesentlichen farblose, Isocyanurat- und/oder Biuretgruppen enthaltende Lösungen umfassend monomeres IPDI und mindestens ein oligomeres Polyisocyanat auf Basis von IPDI zu erhalten. Hierbei handelt es sich um eine bevorzugte Vorgehensweise. Diese ermöglicht es, die Polyisocyanatkomponente a-2) auf Basis von IPDI in einem Verfahrensschritt herzustellen.
Herstellung 2: In einer alternativen Variante erfolgt die Herstellung der Polyisocyanatkomponente a-2) auf Basis von IPDI, indem zunächst mindestens ein oligomeres Polyisocyanat auf Basis von IPDI vorzugsweise nach den oben beschriebenen bekannten Verfahren hergestellt wird. Das so erhaltene mindestens eine oligomere Polyisocyanat auf Basis von IPDI wird nach gängigen Verfahren aufgereinigt, so dass es im Wesentlichen monomerarm ist. Das mindestens eine oligomere Polyisocyanat auf Basis von IPDI liegt in diesem Fall üblicherweise bei Raumtemperatur als Feststoff vor. Es kann in monomerem IPDI aufgelöst werden, um die Polyisocyanatkomponente a-2) auf Basis von IPDI zu erhalten. Diese Vorgehensweise ist jedoch nicht bevorzugt, da sie aufwendiger ist als die zuvor beschriebene Vorgehensweise.

In einer bevorzugten Ausführungsform enthält das Polyisocyanat a-2) auf Basis von IPDI monomeres IPDI und mindestens ein oligomeres Polyisocyanat auf Basis von IPDI.

In einer besonders bevorzugten Ausführungsform umfasst die Polyisocyanatkomponente a-2) auf Basis von IPDI, bezogen auf die Masse, eine größere Menge des monomeren IPDls im Vergleich zur Menge des oligomeren Polyisocyanates auf Basis von IPDI. Die Polyisocyanatkomponente a-2) auf Basis von IPDI umfasst somit, in Bezug auf die gesamte Masse der Polyisocyanatkomponente a-2) auf Basis von IPDI, in dieser Ausführungsform monomeres IPDI im Überschuss zum oligomeren Polyisocyanat auf Basis von IPDI.

Auch die Polyisocyanatkomponenten a-2) auf Basis von IPDI der oben beschriebenen Ausführungsformen können bevorzugt durch die Herstellungsverfahren Herstellung 1 und 2 erhalten werden. Besonders bevorzugt wird sie durch Herstellung 1 erhalten.

Die Polyisocyanatkomponente a-2) auf Basis von IPDI umfasst vorzugsweise 10 bis 45 Gew.-%, besonders bevorzugt 20 bis 40 Gew.-% oligomeres Polyisocyanat auf Basis von IPDI und vorzugsweise 90 bis 55 Gew.-%, besonders bevorzugt 80 bis 60 Gew.-% des monomeren IPDls bezogen auf die Gesamtmasse der beiden.

Die Polyisocyanatkomponente a-2) auf Basis von IPDI, in der vorzugsweise, bezogen auf die Masse, die Menge des monomeren IPDls größer als die Menge des mindestens einen oligomeren Polyisocyanates auf Basis von IPDI ist, weist vorzugsweise einen Gehalt an Isocyanatgruppen von 27 bis 36 Gew.-%, besonders bevorzugt von 29 bis 33 Gew.-% und ganz besonders bevorzugt von 28 bis 32 Gew.-% bezogen auf die Polyisocyanatkomponente a-2) auf Basis von IPDI auf.

Die Polyisocyanatkomponente a-2) auf Basis von IPDI weist vorzugsweise eine Viskosität bei 23°C von 100 bis 3 000 mPa·s, besonders bevorzugt von 300 bis 2 800 mPa·s, ganz besonders bevorzugt von 500 bis 2 650 mPa·s auf.

Die Komponente A) umfassend 10 bis 50 Gew.-% mindestens eines Polyisocyanates a-1) / a-1') auf Basis von HDI, enthaltend ein oligomeres Polyisocyanat auf Basis von HDI und wahlweise monomeres HDI und 50 bis 90 Gew.-% mindestens einer Polyisocyanatkomponente a-2) auf Basis von IPDI, enthaltend mindestens ein oligomeres Polyisocyanat auf Basis von IPDI und wahlweise monomeres IPDI, kann vorzugsweise durch einfaches Vermischen der Komponenten a-1) / a-1') und a-2) hergestellt werden. Das Vermischen kann vorzugsweise durch Rühren unterstützt werden. Es sollte vorzugsweise eine homogene Mischung erhalten werden. Die Homogenität der Mischung kann insbesondere auch durch Vorwärmen der Komponenten a-1) / a-1') und a-2) vor ihrer Vermischung auf Temperaturen von vorzugsweise 30 bis 120 °C verbessert werden. Vorzugsweise wird die Temperatur des Gemisches von a-1) / a-1') und a-2) durch weitere Temperaturzuführung auf vorzugsweise 30 bis 100 °C, besonders bevorzugt 40 bis 80 °C gehalten. Es ist jedoch insbesondere ein Vorteil, dass, wenn die Polyisocyanatkomponente a-2) bezogen auf ihre Masse eine Menge an monomeren IPDI aufweist, welche größer ist als die Menge des oligomeren Polyioscyanates auf Basis von IPDI, das Vermischen der Komponenten a-1) / a-1') und a-2) sowie insbesondere auch das Gießen bei Raumtemperatur stattfinden können. Dies kann insbesondere auf die Viskosität der Komponente a-2) bei Raumtemperatur zurückgeführt werden.

Die Komponente A) fällt somit vorzugsweise als eine klare, im Wesentlichen farblose Mischung an. Die Komponente A) weist bevorzugt bei 23 °C eine Viskosität von 100 bis 3 000 mPa·s, besonders bevorzugt von 150 bis 2 700 mPa·s, ganz besonders bevorzugt von 200 bis 2 210 mPa·s auf.

Der Gehalt an Isocyanatgruppen der Komponente A) liegt bevorzugt im Bereich von 24 bis 34 Gew.-%, besonders bevorzugt 25 bis 32 Gew.-%, ganz besonders bevorzugt 26 bis 30 Gew.-% bezogen auf das Gesamtgewicht der Komponente A).

In einer bevorzugten Ausführungsform umfasst die Komponente A) 10 bis 50 Gew.-% mindestens eines oligomeren Polyisocyanats a-1) / a-1') auf Basis von HDI und 50 bis 90 Gew.-% mindestens eines Polyisocyanates a-2), enthaltend monomeres IPDI und mindestens ein oligomeres IPDI, worin, bezogen auf die Masse, die Menge des monomeren IPDls größer als die Menge des oligomeren Polyisocyanates auf Basis von IPDI ist. Wie bereits oben ausgeführt, weist diese Ausführungsform insbesondere den Vorteil auf, dass durch den hohen Anteil an monomeren IPDI in der Komponente a-2) sowie insgesamt auch in der Zusammensetzung die Verarbeitung der Komponente a-2) und auch der Zusammensetzung bei Raumtemperatur möglich ist. Dabei werden die resultierenden Eigenschaften der gehärteten Zusammensetzung bevorzugt jedoch im Wesentlichen nicht beeinflusst. Damit sind besonders bevorzugt sowohl die mechanischen als auch die optischen Eigenschaften der gehärteten Zusammensetzung dieser Ausführungsform im Wesentlichen gleich zu denen einer gehärteten Zusammensetzung, in der in der Komponente a-2) die Menge des monomeren IPDls geringer ist als die Menge des oligomeren Polyisocyanates auf Basis von IPDI.

Die Komponente A) ist bevorzugt lösemittelfrei.

### Komponente B)

Die erfindungsgemäße Zusammensetzung enthält mindestens eine Schwefel enthaltende Komponente.

Diese Komponente B) ist vorzugsweise auf Grund der im statistischen Mittel mindestens zwei gegenüber Isocyanatgruppen reaktiven Gruppen pro Molekül befähigt, mit der Komponente A), welche Isocyanatgruppen enthält, zu reagieren.

Besonders bevorzugt weist die Komponente B) eine mittlere Funktionalität in Bezug auf die gegenüber Isocyanatgruppen reaktiven Gruppen von 2,0 bis 4,0, vorzugsweise von 2,5 bis 4,0, besonders bevorzugt von 3,0 bis 4,0 auf. Das Äquivalentverhältnis von Isocyanatgruppen der Komponente A) zu gegenüber Isocyanatgruppen reaktiven Gruppen der Komponente B) beträgt bevorzugt von 0,5 : 1 bis 2,0 : 1, besonders bevorzugt von 0,7 : 1 bis 1,3 : 1, noch bevorzugter von 0,8 : 1 bis 1,2 : 1 und ganz besonders bevorzugt von 1 : 1.

Die Komponente B) ist bevorzugt lösemittelfrei. Weiterhin weist die Schwefel enthaltende Komponente B) bevorzugt ein Molekulargewicht von 78 bis 1000 g/mol, vorzugsweise von 140 bis 800 g/mol, besonders bevorzugt von 264 bis 488 g/mol auf.

In einer bevorzugten Ausführungsform ist die gegenüber Isocyanatgruppen reaktive Komponente frei von aromatischen Strukturen. Aromatische Strukturen sind insbesondere dafür verantwortlich, dass die resultierenden Kunststoffe nicht lichtecht und vergilbungsstabil sind.

In einer bevorzugten Ausführungsform dass die Schwefel enthaltende Komponente ausgewählt wird aus der Gruppe, bestehend aus Polythiolen, Schwefel enthaltende Hydroxyverbindungen und Mischungen davon.

### Polythiole

Geeignete Komponenten B) sind insbesondere Verbindungen, welche mindestens zwei Thiolgruppen pro Molekül aufweist.

Bevorzugte Polythiole werden beispielsweise ausgewählt aus der Gruppe, bestehend aus einfachen Alkanthiolen, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiolen, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercaptoethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercaptoethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiolen, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-l-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Tri-methylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercapto-propionat), 1,4-Cyclohexandiol-bis(2-mercaptoacetat), 1,4-Cyclohexandiol-bis(3-mercaptopropionat), Hydroxy-methylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat oder Bis(2-mercaptoethylester)thiodipropionat und aromatischen Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, l,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl oder 4,4'-Dimercaptobiphenyl. Solche Polythiole können einzeln oder auch in Form beliebiger Gemische untereinander verwendet werden.

### Schwefel enthaltende Hydroxyverbindungen

Ebenso sind auch Schwefel enthaltende Hydroxyverbindungen als Komponente B) insbesondere geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Bevorzugte Schwefel enthaltende Hydroxyverbindungen können ausgewählt werden aus der Gruppe, bestehend aus einfachen Mercaptoalkoholen, wie z. B. 2-Mercaptoethanol, 3-Mercaptopropanol, 1,3-Dimercapto-2-propanol, 2,3-Dimercaptopropanol oder Dithioerythritol, Thioetherstrukturen enthaltenden Alkoholen, wie z. B. Di(2-hydroxyethyl)sulfid, 1,2-Bis(2-hydroxyethylmercapto)ethan, Bis(2-hydroxyethyl)disulfid oder 1,4-Dithian-2,5-diol, und Schwefel enthaltende Diole mit Polyesterurethan-, Polythioesterurethan-, Polyesterthiourethan- oder Polythioesterthiourethanstruktur der in der EP-A 1 640 394 genannten Art. Solche Schwefel enthaltenden Hydroxyverbindungen können einzeln oder auch in Form beliebiger Gemische untereinander verwendet werden.

Besonders bevorzugte Schwefel enthaltende Komponenten B) sind Polyether- und Polyesterthiole der genannten Art. Ganz besonders bevorzugte Komponenten B) können ausgewählt werden aus der Gruppen, bestehend aus 4-Mercaptomethyl-1,8-dimercapto-3,6-dithiaoctan, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercapto-methyl-1,11-dimercapto-3,6,9-trithiaundecan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

### Komponente C)

Neben den genannten Komponenten A) und B) können gegebenenfalls ein oder mehrere Hilfs- und/oder Zusatzmittel C) verwendet werden. Diese werden vorzugsweise ausgewählt aus der Gruppe, bestehend aus Katalysatoren, UV-Stabilisatoren, Antioxidantien, Formtrennmittel und beliebige Gemische daraus.

Als Katalysatoren können übliche, aus der Polyurethanchemie bekannte Katalysatoren zum Einsatz kommen. Bevorzugte Katalysatoren können ausgewählt werden aus der Gruppe, bestehend aus tertiären Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methylmorpholin, N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, N,N',N"-Tris-(dimethylaminopropyl)-S-hexahydrotriazin, Bis(dimethylaminoethyl)ether; Metallsalzen, wie z. B. anorganische und/oder organische Verbindungen des Eisens, Bleis, Bismuts, Zinks, und/oder Zinns in üblichen Oxidationsstufen des Metalls, beispielsweise Eisen(II)-chlorid, Eisen(III)-chlorid, Bismut(III)-, Bismut(III)-2-ethylhexanoat, Bismut(III)-octoat, Bismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid, Bleioctoat; Amidinen, wie z. B. 2,3-Dimethyl-3,4,5,6-tetrahydropyrimidin; Tetraalkylammoniumhydroxiden, wie z. B. Tetramethylammoniumhydroxid; Alkalihydroxiden, wie z. B. Natriumhydroxid; Alkalialkoholaten, wie z. B. Natriummethylat, Kaliumisopropylat; und Alkalisalzen von langkettigen Fettsäuren mit 10 bis 20 C-Atomen und gegebenenfalls seitenständigen OH-Gruppen.

Besonders bevorzugte einzusetzende Katalysatoren C) sind tertiäre Amine, Zinn-, Zink und Bismutverbindungen der genannten Art.

Die genannten Katalysatoren können bei der Herstellung der erfindungsgemäßen transparenten Materialien einzeln oder in Form beliebiger Mischungen untereinander eingesetzt werden. Sie kommen dabei, falls überhaupt, vorzugsweise in Mengen von 0,01 bis 5,0 Gew. %, besonders bevorzugt 0,1 bis 2 Gew.-%, berechnet als Gesamtmenge an eingesetzten Katalysatoren bezogen auf die Gesamtmenge der verwendeten Komponenten A) und B) der erfindungsgemäßen Zusammensetzung, zum Einsatz.

Die aus der erfindungsgemäßen Zusammensetzung erhaltenen transparenten Materialien zeichnen sich bereits als solche, d. h. ohne Zusatz entsprechender Stabilisatoren, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel C) mitverwendet werden.

Geeignete UV-Stabilisatoren können vorzugsweise ausgewählt werden aus der Gruppe, bestehend aus Piperidinderivaten, wie z. B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z. B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z. B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z. B. 2-Ethyl-2'-ethoxy- oder 4-Methyl-4'-methoxyoxalanilid; Salicylsäureestern, wie z. B. Salicylsäurephenylester, Salicylsäure-4-tert-butylphenylester, Salicylsäure-4-tert-octylphenylester; Zimtsäureesterderivaten, wie z. B. α-Cyano-β-methyl-4-methoxyzimtsäuremethylester, α-Cyano-β-methyl-4-methoxyzimtsäurebutylester, α-Cyano-β-phenylzimtsäureethylester, α-Cyano-β-phenylzimtsäureisooctylester; und Malonesterderivaten, wie z. B. 4-Methoxy-benzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren für die erfindungsgemäß herstellbaren transparenten Materialien sind solche, die Strahlung einer Wellenlänge < 400 nm vollständig absorbieren, so dass bei einer Verwendung der erfindungsgemäßen Zusammensetzung als Brillengläser ein vollständiger Schutz des Auges vor UV-Strahlung gegeben ist. Hierzu zählen beispielsweise die genannten Benztriazolderivate. UV-Stabilisatoren mit Benztriazol-Struktur sind bevorzugt. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Falls überhaupt, werden die beispielhaft genannten UV-Stabilisatoren der erfindungsgemäßen Zusammensetzung vorzugsweise in Mengen von 0,001 bis 3,0 Gew. %, besonders bevorzugt 0,01 bis 2 Gew.-%, berechnet als Gesamtmenge an eingesetzten UV-Stabilisatoren bezogen auf die Gesamtmenge der verwendeten Komponenten A) und B) der erfindungsgemäßen Zusammensetzung, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (lonol), Pentaerythrit-tetrakis(3-(3,5-di-tert-butyl-4-hydroxy-phenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew. %, besonders bevorzugt 0,02 bis 2 Gew.-%, berechnet als Gesamtmenge an eingesetzten Antioxidantien bezogen auf die Gesamtmenge der verwendeten Komponenten A) und B) der erfindungsgemäßen Zusammensetzung, mitverwendet.

Die erfindungsgemäße Zusammensetzung kann gegebenenfalls als weitere Hilfs- und Zusatzstoffe C) auch interne Formtrennmittel enthalten.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z. B. Trimethylethylammoniumchlorid, Trimethylstearyl-ammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate mit 2 bis 18 Kohlenstoffatomen im Alkylrest, wie z. B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didoceylphosphat, Tridecanolephosphat, Bis(tridecanol)-phosphat, Stearylphospat, Distearylphosphat und beliebige Gemische solcher Formtrennmittel.

Besonders bevorzugte Formtrennmittel sind die genannten sauren Mono- und Dialkylphosphate, ganz besonders bevorzugt solche mit 8 bis 12 Kohlenstoffatomen im Alkylrest.

Interne Formtrennmittel werden in der erfindungsgemäßen Zusammensetzung, falls überhaupt, vorzugsweise in Mengen von 0,01 bis 3,0 Gew. %, besonders bevorzugt 0,02 bis 2 Gew.-%, berechnet als Gesamtmenge an eingesetzten internen Formtrennmittel bezogen auf die Gesamtmenge der verwendeten Komponenten A) und B) der erfindungsgemäßen Zusammensetzung, eingesetzt.

Zur Kompensation eines gegebenenfalls auftretenden Gelbstichs, der in den erfindungsgemäß erhaltenen Polyurethanen beispielsweise bei Mitverwendung der oben beschriebenen UV-Stabilisatoren auftreten kann, können den erfindungsgemäßen Zusammensetzungen vorzugsweise als weitere Hilfs- und Zusatzmittel C) optionale, an sich bekannte Bläuungsmittel zugesetzt werden. Diese kommen vorzugsweise nur in äußerst niedrigen Konzentrationen, beispielsweise in Mengen von 5 ppb bis 50 ppm zum Einsatz, um eine Abnahme der Transmission oder eine Vergrauung des Materials zu verhindern. Die Zugabe erfolgt bevorzugt in Form eines Masterbatches, d. h. als vorformulierte verdünnte Lösung in einem der sonstigen Rezepturbestandteile, beispielsweise der Komponente A) und/oder der Komponente B). Geeignete Bläuungsmittel für die erfindungsgemäßen Zusammensetzungen können vorzugsweise ausgewählt werden aus der Gruppe, bestehend aus kommerziell erhältlichen Anthrachinonfarbstoffen, wie z. B. Exalite Blue 78-13 der Firma Exciton, Inc., Dayton, Ohio, USA oder Macrolex Violet B, Macrolex Blue RR und Macrolex Violet 3R der Fa. Lanxess AG, Leverkusen, Deutschland und beliebige Mischungen davon.

Alle vorstehend genannten, gegebenenfalls mitzuverwendende Hilfs- und/oder Zusatzmittel C) können sowohl der Komponente A) als auch dem Komponente B) zugemischt werden. Bevorzugt werden Komponenten C) ausgewählt aus der Gruppe, bestehend aus internen Trennmitteln, Katalysatoren und Mischungen daraus, der Komponente A) zugemischt. Komponente C), welche ausgewählt wird aus der Gruppe, bestehend aus UV-Stabilisatoren, Antioxidantien, Farbstoffen und Mischungen daraus, werden bevorzugt der Komponente B) zugesetzt.

In einer bevorzugten Ausführungsform wird eine Zusammensetzung bereitgestellt, worin mindestens eines, bevorzugter alle der folgenden Merkmale erfüllt sind:
- die Komponente A) bestehend aus a-1) / a-1') und a-2) bei 23°C eine Viskosität von 100 bis 3.000 mPa·s und einen Gehalt an Isocyanatgruppen von 24 bis 34 Gew.-% aufweist,
- die Komponente a-1) / a-1') auf Basis von HDI einen NCO-Gehalt von 20 bis 24 Gew.-% aufweist,
- die Komponente a-2) auf Basis von IPDI eine Lösung eines oligomeren Polyisocyanates auf Basis von Isophorondiisocyanat in einer überschüssigen Gewichtsmenge (> 50 Gew.-% bezogen auf das Gesamtgewicht von a-2)) an monomerem Isophorondiisocyanat mit einen NCO-Gehalt der Komponente a-2) von 27 bis 36 Gew.-% ist,
- die Komponente B) ein Molekulargewicht von 78 bis 1000 g/mol aufweist,
- die Komponente B) eine mittlere Funktionalität von 2 bis 4 aufweist,
- die Komponente B) ein Polythiol und/oder eine Schwefel enthaltende Hydroxyverbindung ist,
- optional ein oder mehrere Hilfs- und/oder Zusatzmittel C), bevorzugt mindestens einen Katalysator, mindestens einen UV-Stabilisator, mindestens ein Antioxidant und mindestens ein Formtrennmittel enthalten sind
- das Äquivalentverhältnis von Isocyanatgruppen in A) zu gegenüber Isocyanatgruppen reaktiven Gruppen in B) von 0,5 : 1 bis 2,0 : 1 ist.

In einer weiteren Ausführungsform der vorliegenden Erfindung besteht die erfindungsgemäße Zusammensetzung aus den Komponenten A), B) und C).

In einer weiteren Ausführungsform betrifft die vorliegende Erfindung auch ein Kit-of-parts umfassend die Komponenten A) und B), wie oben definiert, in räumlich getrennter Anordnung. Dabei kann es sich um ein Zwei-Komponenten-System handeln. In diesem Fall kann die gegebenenfalls vorhandene Komponente C), wie oben definiert, einer oder beiden Komponenten A) und B) zugesetzt werden. Dabei werden bevorzugt Komponenten C) ausgewählt aus der Gruppe, bestehend aus internen Trennmitteln, Katalysatoren und Mischungen daraus, der Komponente A) zugemischt. Komponente C), welche ausgewählt wird aus der Gruppe, bestehend aus UV-Stabilisatoren, Antioxidantien, Farbstoffen und Mischungen daraus, werden bevorzugt der Komponente B) zugesetzt. Ebenso kann die gegebenenfalls vorhandene Komponente C) auch teilweise oder ganz in einer dritten, räumlich getrennt vorliegenden Komponente des Kit-of-parts vorliegen. Dabei können die Hilfs- und/oder Zusatzstoffe so aufgeteilt werden, dass einige den Komponenten A) und/oder B) beigemengt werden und andere als dritte Komponente vorliegen.

### Erfindungsgemäße Polythiourethane

Die erfindungsgemäße Zusammensetzung umfassend die beschriebenen Komponenten A) und B), sowie gegebenenfalls die Komponente C), wird in Verhältnissen, wie oben vorzugsweise über das Äquivalentverhältnis der Isocyanatgruppen zu gegenüber Isocyanatgruppen reaktiven Gruppen oder das Gew.-% definiert, vorzugsweise mit Hilfe geeigneter Mischaggregate gemischt. Danach kann die erfindungsgemäße Masse nach beliebigen Methoden, vorzugsweise in offenen oder geschlossenen Formen, vorzugsweise durch einfaches Vergießen von Hand, oder mit Hilfe geeigneter Maschinen, wie z. B. den in der Polyurethantechnologie üblichen Niederdruck- oder Hochdruckmaschinen oder nach dem RIM-Verfahren ausgehärtet werden. Dabei werden vorzugsweise Temperaturen von bis zu 160 °C, besonders bevorzugt von 10 bis 140 °C, ganz besonders bevorzugt von 20 bis 130 °C verwendet. Gegebenenfalls kann die Aushärtung auch unter einem erhöhten Druck, vorzugsweise von bis zu 300 bar, besonders bevorzugt von bis zu 100 bar, ganz besonders bevorzugt bis zu 40 bar stattfinden.

Die erfindungsgemäße Zusammensetzung kann zur Herstellung der erfindungsgemäßen Polythiourethane verwendet werden. Diese Polythiourethane bilden sich, indem die Isocyanatgruppen der Komponente A) mit den gegenüber Isocyanatgruppen reaktiven Gruppen der Komponente B) reagieren. Dabei kann bevorzugt mindestens eine Polythiourethangruppe (1) gebildet werden. Es ist aber auch möglich, dass eine der folgenden Gruppen (1) bis (4) bereits schon in der Komponente B) vorhanden ist und durch die Reaktion der Komponente A) und B) bevorzugt mindestens eine Urethangruppe gebildet wird. Dies ist insbesondere dann der Fall, wenn die Schwefel enthaltende Komponente B) mindestens eine Hydroxygruppe aufweist. Damit fallen unter Polythiourethane im Sinne der vorliegenden Erfindung Verbindungen, die bevorzugt mindestens eine der folgenden Gruppen (1) bis (4) enthalten 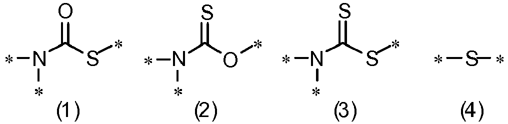 mit der Vorgabe, dass, wenn das Polythiourethan mindestens eine der Gruppen (2) bis (4) umfasst, dieses Polythiourethan zusätzlich auch mindestens eine Urethangruppe und/oder Thiourethangruppe (1) umfasst. Besonders bevorzugt weisen die Polythiourethane der vorliegenden Erfindung mindestens eine der Gruppen (1) und/oder (4) auf, mit der Vorgabe, dass, wenn das Polythiourethan mindestens eine der Gruppen (4) umfasst, dieses Polythiourethan zusätzlich auch mindestens eine Urethangruppe und/oder Thiourethangruppe (1) umfasst.

Es ist aber auch möglich, dass durch Nebenreaktionen andere funktionelle Gruppen neben diesen Gruppen (1) bis (4) im erfindungsgemäßen Polyurethan vorliegen. Dies ist jedoch weniger bevorzugt.

Die erfindungsgemäße Zusammensetzung kann zur Herstellung von transparenten Materialien verwendet werden, die aus dem erfindungsgemäßen Polythiourethan bestehen. Somit wird insbesondere das hergestellte Polythiourethan zur Herstellung transparenter Materialien verwendet.

Ebenso kann die erfindungsgemäße Zusammensetzung zur Herstellung transparenter Formkörper verwendet werden. Dabei wird der Formkörper insbesondere durch die Verwendung des hergestellten Polythiourethans gebildet. Ebenso kann das hergestellte transparente Material zur Herstellung transparenter Formkörper verwendet werden.

Formkörper im Sinne dieser Erfindung sind insbesondere Formteile, wie sie in DIN 7708 definiert sind, also gestaltete Kunststofferzeugnisse, die aus Formmassen oder Halbzeugen hergestellt worden sind. Dabei sind Formmassen flüssige, pastöse oder feste Stoffe in verarbeitungsfertigem Zustand, die spanlos zu Halbzeugen oder Formteilen geformt werden können. Davon zu unterscheiden ist insbesondere eine Beschichtung, wie sie in EN ISO 4618:2006 definiert ist. Demnach ist eine Beschichtung eine durchgehende Schicht, die durch ein- oder mehrmaliges Auftragen von Beschichtungsstoff auf ein Substrat entsteht. Eine Beschichtung zeichnet sich somit insbesondere durch die Anwesenheit eines mit ihr in Beziehung stehenden Substrates. Insbesondere sind Beschichtungen in der Regel wesentlich dünner als Formkörper. Besonders bevorzugte Formkörper dieser Erfindung sind dreidimensionale einteilige Formkörper, deren kleinste Dimension (Dicke) mindestens 1 mm, besonders bevorzugt mindestens 2 mm, ganz besonders bevorzugt mindestens 3 mm ist. Bevorzugt weisen diese Formkörper eine derartige Dimension auf, dass ihre Geometrie eine Kugel mit einem Durchmesser von mindestens 1 mm, besonders bevorzugt mindestens 2 mm, ganz besonders bevorzugt mindestens 3 mm aufnehmen kann.

Die erfindungsgemäßen Formkörper eignen sich für eine Vielzahl unterschiedlicher Anwendungen transparenter Materialien, insbesondere als Glasersatz zur Herstellung von Scheiben, wie z. B. Sonnendächern, Front-, Heck- oder Seitenscheiben im Fahrzeug- oder Flugzeugbau, als Sicherheitsglas oder zum transparenten Verguss optischer, elektronischer oder optoelektronischer Bauteile, wie z. B. von Solarmodulen, Leuchtdioden oder von Linsen oder Kollimatoren, wie sie beispielsweise als Vorsatzoptik in LED-Leuchten oder Automobilscheinwerfern zum Einsatz kommen.

Ebenso kann der erfindungsgemäße Formköper eine optische Linse sein. Eine optische Linse ist insbesondere ein optisch wirksames Bauelement mit zwei lichtbrechenden Flächen. Insbesondere wird unter einer optischen Linse ein lichtdurchlässiger Formkörper verstanden, welcher durch Lichtbrechung die Abbildung von Gegenständen unter Verkleinerung oder Vergrößerung gestattet. Solche Linsen können insbesondere Anwendung finden in Mikroskopen, Fernrohren, Objektiven, Scheinwerfern, Projektoren, Lupen und Brillengläsern. In optischen Geräten sind solche Linsen meist zu Linsensystemen kombiniert.

Besonders bevorzugt wird das erfindungsgemäße Polyurethan verwendet, um einen transparenten Formkörper herzustellen, der eine optische Linse ist. Ganz besonders bevorzugt wird das erfindungsgemäße Polyurethan verwendet, um eine optische Linse herzustellen, welche ein Brillenglas ist.

Die Herstellung optischer Linsen, insbesondere Brillengläser, erfolgt in der Regel nach den in der Brillenglasindustrie üblichen Gießverfahren. Dabei werden bevorzugt aus zwei gläsernen Formschalen und einem polymeren Dichtungsring bestehenden Gießformen verwendet, in denen die erfindungsgemäße Zusammensetzung ausgehärtet wird. Bevorzugt erfolgt die Aushärtung drucklos. Besonders bevorzugt wird dabei eine streng kontrollierte Temperaturführung verwendet. Eine solche Temperaturführung kann vorzugsweise im Bereich von 10 bis 150°C vorzugsweise über einen Zeitraum von bis zu 60 h, besonders bevorzugt bis zu 48 h erfolgen. In einer bevorzugten Ausführungsform erfolgt die Aushärtung lösemittelfrei. In einer weiteren bevorzugten Ausführungsform umfasst das Verfahren zur Herstellung einen Schritt des Nachtemperns der entformten transparenten Materialien nach der Umsetzung.

In einem Aspekt dieser Erfindung wird ein Polythiourethan bereitgestellt, welches erhalten wird durch die Härtung der erfindungsgemäßen Zusammensetzung.

In einem anderen Aspekt dieser Erfindung wird eine optische Linse bereitgestellt, welche unter Verwendung der erfindungsgemäßen Zusammensetzung erhalten wird.

In einem weiteren Aspekt dieser Erfindung wird ein Brillenglas bereitgestellt, welches unter Verwendung der erfindungsgemäßen Zusammensetzung erhalten wird.

Ebenso wird ein Verfahren zur Herstellung transparenter Materialien durch Härtung der erfindungsgemäßen Zusammensetzung bereitgestellt. Dabei können die transparenten Materialien insbesondere transparente Formkörper sein. Diese Formkörper können vorzugsweise optische Linsen, insbesondere Brillengläser darstellen.

Um Blasenfreiheit und höchste Transparenz der erfindungsgemäßen transparenten Materialien zu gewährleisten, werden dabei die beiden Komponenten A) und B), üblicherweise nach Zusatz der gegebenenfalls mitzuverwendenden Hilfs- und Zusatzmittel C), vor oder nach dem Vermischen entlüftet. Dies kann beispielsweise für 10 min bis 6 h bei Temperaturen bis zu 80°C unter vermindertem Druck, beispielsweise bei 5 bis 50 mbar, erfolgen. Anschließend wird die Zusammensetzung gegebenenfalls wieder auf Temperaturen < 50°C, vorzugsweise < 30 °C abgekühlt und vorzugsweise gemischt über Feinfilter einer bevorzugten mittleren Porenweite von 0,1 bis 10 µm in die Glasformen eingefüllt. Zur kontrollierten Aushärtung der Zusammensetzung ist es bevorzugt, die befüllten und verschlossenen Glasformen gegebenenfalls zunächst abzukühlen. Dabei kann die Temperatur bevorzugt < 20°C betragen. Anschließend wird über mehrere Stunden linear oder stufenweise bis auf eine Temperatur von vorzugsweise > 100°C, beispielsweise bis auf 130°C aufgeheizt.

Nach vollständiger Aushärtung und Abkühlung auf Raumtemperatur werden die so erhaltenen Rohlinge aus der Gießform entnommen. Zum Abbau von Materialspannungen werden sie üblicherweise bei Temperaturen von vorzugsweise > 100°C, beispielsweise bei 130°C, für mehrere Stunden, beispielsweise bis zu 10 h, nachgetempert. Der Verlauf der Aushärtung kann beispielsweise durch IR-spektroskopischen Bestimmung der noch vorhandenen Isocyanatgruppen erfolgen.

Auf diese Weise werden aus den erfindungsgemäßen Zusammensetzungen hochtransparente Materialien, insbesondere Brillenglasrohlinge erhalten. Solche Brillenglasrohlinge können nach den in der Brillenglasindustrie üblichen Verfahren, wie z. B. Schleifen, Polieren, Färben, Aufbringen von Antireflexbeschichtungen, Hartlackschichten und/oder hydrophoben Beschichtungen zu fertigen Brillengläsern weiterverarbeitet werden.

Das erfindungsgemäße Verfahren ermöglicht insbesondere die Herstellung von vergilbungsstabilen Brillengläsern. Diese weisen bevorzugt hohe Brechungsindices im Bereich von 1,56 bis 1,60, bei gleichzeitig geringer optischer Dispersion auf. Zusätzlich verfügen sie vorzugsweise über sehr gute mechanische und thermische Beständigkeiten. Aufgrund ihrer hohen Glasübergangstemperaturen vorzugsweise im Bereich von 100°C und der hohen Wärmeformbeständigkeiten vorzugsweise von > 80°C eignen sie sich insbesondere auch zur Herstellung randloser Brillen. Die erfindungsgemäßen Polythiourethangläser lassen sich vorzugsweise mit Hilfe geeigneter UV-Stabilisatoren auch so ausrüsten, dass die für das menschliche Auge schädlichen UV-Strahlen im Wellenlängenbereich < 400 nm vollständig gefiltert werden.

### Beispiele

Alle Prozentangaben beziehen sich, soweit nichts Anderslautendes vermerkt, auf das Gewicht.

Die Bestimmung der NCO-Gehalte erfolgt erfindungsgemäß titrimetrisch nach DIN EN ISO 11909.

NCO-Funktionalitäten wurden aus dem Gelpermeationschromatogramm (GPC) berechnet.

OH-Zahlen wurden erfindungsgemäß titrimetrisch nach DIN 53240 2: 2007-11, Säure-Zahlen wurden erfindungsgemäß nach DIN 3682 bestimmt.

Die Rest-Monomeren Gehalte wurden nach DIN EN ISO 10283 gaschromatographisch mit internem Standard gemessen.

Die Angaben der g/val SH-Werte wurden entweder vom Hersteller übernommen oder berechnet.

Sämtliche Viskositätsmessungen erfolgten mit einem Physica MCR 51 Rheometer der Fa. Anton Paar Germany GmbH (DE) nach DIN EN ISO 3219 bei den jeweils angegebenen Temperaturen. Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 10 °C/min bestimmt.

Die Bestimmung der Wärmeformbeständigkeit HDT erfolgte nach DIN EN ISO 75-2, Verfahren B, unter Verwendung einer Biegespannung von 0,45 MPa.

Shore-Härten wurden nach DIN 53505 mit Hilfe eines Shore-Härteprüfgerätes Zwick 3100 (Fa. Zwick, DE) gemessen.

Die Messung der Brechungsindices und Abbe-Zahlen erfolgte an einem Abbe-Refraktometer Modell B der Fa. Zeiss.

Transmission-Messungen nach ASTM D 1003 wurden mit einem Haze-Gard Plus der Fa. Byk durchgeführt. Die wellenlängenabhängige Transmission wurde mit Hilfe eines Zwei-Strahl-Spektralphotometers vom Typ Lambda 900 mit Integrationskugel (150 mm) der Fa. Perkin-Elmer, USA (0°/diffus, Referenz: Luft T=100%) bestimmt.

### Komponente A)

### Polyisocyanat a1-I)

Isocyanuratgruppen enthaltendes HDI-Polyisocyanat, hergestellt in Anlehnung an Beispiel 11 der EP-A 330 966, mit der Änderung, dass als Katalysatorlösemittel 2-Ethylhexanol statt 2-Ethyl-1,3-hexandiol eingesetzt wurde.

| | |
|---|---|
| NCO-Gehalt: | 22,9 % |
| NCO-Funktionalität: | 3,2 |
| Monomeres HDI: | 0,1 % |
| Viskosität (23°C): | 1.200 mPa·s |

### Polyisocyanat a1-II)

Isocyanurat- und Iminoxadiazindiongruppen enthaltendes HDI-Polyisocyanat, hergestellt in Anlehnung an Beispiel 4 der EP-A 0 962 455, durch Trimeriserung von HDI unter Verwendung einer 50 %-igen Lösung von Tetrabutylphosphoniumhydrogendifluorid in Isopropanol/Methanol (2:1) als Katalysator, Reaktionsstoppung bei einem NCO-Gehalt der Rohmischung von 43 % durch Zugabe von Dibutylphosphat und anschließende Abtrennung des nicht umgesetzten HDI durch Dünnschichtdestillation bei einer Temperatur von 130°C und einem Druck von 0,2 mbar.

| | |
|---|---|
| NCO-Gehalt: | 23,4 % |
| NCO-Funktionalität: | 3,2 |
| Monomeres HDI: | 0,2 % |
| Viskosität (23°C): | 700 mPa·s |

### Polyisocyanat a2 - I)

Isophorondiisocyanat (IPDI) wurde entsprechend Beispiel 2 der EP-A-0 003 765 bis zu einem NCO-Gehalt von 30,1 % trimerisiert. Der Katalysator wurde durch Zugabe einer äquimolaren Menge an Dibutylphosphat, bezogen auf eingesetzte Katalysatormenge, und 30 minütiges Nachrühren bei 80°C deaktiviert. Auf die Abtrennung des nicht umgesetzten überschüssigen IPDI durch Dünnschichtdestillation wurde verzichtet. Es lag eine Lösung eines IPDI-Isocyanuratpolyisocyanats (35,5 Gew.-%) in monomerem IPDI (64,5 Gew.-%) vor.

| | |
|---|---|
| NCO-Gehalt: | 30,5 % |
| Monomeres IPDI: | 64,5 % |
| Viskosität (23°C): | 540 mPa·s |

### Polyisocyanat a2 - II)

Zu einem Gemisch aus 1554 g (7 mol) IPDI und 0,5 g (0,002 mol) Dibutylphosphat wurden unter Stickstoff und Rühren bei einer Temperatur von 80 °C über einen Zeitraum von 5 Stunden 18 g (1,0 mol) Wasser kontinuierlich zudosiert. Kurze Zeit nach Beginn der Wasserzugabe setzte eine stetige CO₂-Entwicklung ein, die nach einer Nachrührzeit von 3 Stunden bei 90 °C beendet war. Es lag eine farblose Lösung eines IPDI-Biuretpolyisocyanates (38,4 Gew.-%) in überschüssigem monomerem Diisocyanat (61,6 Gew.-%) vor.

| | |
|---|---|
| NCO-Gehalt: | 30,0 % |
| Viskosität (23°C): | 2600 mPa·s |

### Polyisocyanat a2 - III)

Aus dem vorstehend beschriebenen Polyisocyanat a2-I) wurde das monomere IPDI durch Dünnschichtdestillation bei einer Temperatur von 170°C und einem Druck von 0,1 mbar abgetrennt. Man erhielt ein festes IPDI-Isocyanuratpolyisocyanat mit folgenden Kenndaten:

| | |
|---|---|
| NCO-Gehalt: | 17,0 % |
| Monomeres IPDI: | 0,3 % |
| Tg: | 65°C |

### Mischungen der Komponenten a-1) / a-1') und a-2)

Die HDI-Polyisocyanate vom Typ a-1) / a-1') werden gemeinsam mit den Lösungen a-2) von IPDI-Polyisocyanaten in überschüssigem monomerem IPDI, monomerem HDI und/oder IPDI in einem Reaktionsgefäß bei Raumtemperatur (beziehungsweise im Falle des Polyisocyanates A-VI bei 60 °C) unter N₂-Atmosphäre gerührt, bis jeweils eine klare Lösung vorlag.

Die nachfolgende Tabelle 1 zeigt Zusammensetzungen (Gew.-Teile) und Kenndaten der so hergestellten Polyisocyanate.

**Tabelle 1: Zusammensetzungen der Komponente A)**

| **Polyisocyanat** | **A-I** | **A-II** | **A-III** | **A-IV** | **A-V** | **A-VI** | **A-VII** (Vergl.) | **A-VIII** (Vergl.) | **A-XI** (Vergl.) | **A-X** (Vergl.) |
|---|---|---|---|---|---|---|---|---|---|---|
| Polyisocyanat a1-I) | 20 | 30 | 50 | - | 20 | 20 | 55 | 15 | - | - |
| Polyisocyanat a1-II) | - | - | - | 30 | - | - | - | - | - | - |
| Polyisocyanat a2 - I) | 80 | 70 | 50 | 70 | - | 46 | 45 | - | 85 | - |
| Polyisocyanat a2 - II) | - | - | - | - | 80 | - | - | - | - | - |
| Polyisocyanat a2 - III) | - | - | - | - | - | 34 | - | - | - | - |
| Hexamethylendiisocyanat | - | - | - | - | - | - | - | - | 15 | 15 |
| Isophorondiisocyanat | - | - | - | - | - | - | - | 85 | - | 85 |
| NCO-Gehalt [%] | 29,0 | 28,2 | 26,7 | 28,4 | 28,6 | 24,4 | 26,3 | 35,6 | 33,4 | 39,6 |
| Viskosität (23 °C) [mPa·s] | 660 | 720 | 860 | 550 | 2200 | 41100 | 890 | 180 | 450 | 15 |
| Viskosität (60 °C) [mPa.s] | n. b. | n. b. | n. b. | n. b. | n. b. | 960 | n. b. | n. b. | n. b. | n. b. |

### Komponente B)

### Polythiol B1)

### 4-Mercaptomethyl-1,8-dimercapto-3,6-dithiaoctan

| | |
|---|---|
| Äquivalentgewicht: | 88 g/val SH |
| Funktionalität: | 3,0 |
| Viskosität (23°C): | 40 mPa·s |
| n_{D}: | 1,6304 |

### Polythiol B2)

### Pentaerythrit-tetrakis(3-mercaptopropionat)

| | |
|---|---|
| Äquivalentgewicht: | 122 g/val SH |
| Funktionalität: | 4,0 |
| Viskosität (23°C): | 400 mPa·s |
| n_{D}: | 1,5312 |

### Polythiol B3)

### Trimethylolpropan-tris(3-mercaptopropionat)

| | |
|---|---|
| Äquivalentgewicht: | 133 g/val SH |
| Funktionalität: | 3,0 |
| Viskosität (23°C): | 150 mPa·s |
| n_{D}: | 1,5290 |

### Polythiol B4)

### Trimethylolpropan-tris(2-mercaptoacetat)

| | |
|---|---|
| Äquivalentgewicht: | 119 g/val SH |
| Funktionalität: | 3,0 |
| Viskosität (23°C): | 120 mPa·s |
| n_{D}: | 1,5303 |

### Beispiele 1 bis 7 und Vgl. 1 bis Vgl. 7 (Herstellung transparenter Materialien)

Zur Herstellung von transparenten Materialien wurden die Komponenten A) und B), gegebenenfalls unter Mitverwendung von DBTL als Katalysator, in den in Tabelle 2 angegebenen Kombinationen und Mengenverhältnissen (Gew.-Teile), jeweils entsprechend einem Äquivalentverhältnis von Isocyanatgruppen zu gegenüber Isocyanatgruppen reaktiven Gruppen von 1 : 1, mit Hilfe eines Speed-Mixers DAC 150 FVZ (Firma Hauschild, DE) 1 Min bei 3500 U/Min homogenisiert und anschließend von Hand bei Raumtemperatur in offene, nicht beheizte Polypropylen-Formen gegossen. Aufgrund der hohen Viskosität der Polyisocyanatkomponente A-VI bei Raumtemperatur wurde diese zur Erleichterung der Verarbeitbarkeit vor der Einwaage auf eine Temperatur von 60°C erwärmt (alle anderen Polyisocyanatkomponenten wurden bei Raumtemperatur verarbeitet). Nach einer Aushärtezeit von 8 Stunden bei 100 °C in einem Trockenschrank wurden die Prüfplatten (Länge x Breite x Höhe: 200 mm x 100 mm x 4 mm) entformt.

Nach einer Nachhärtezeit von 24 Stunden bei Raumtemperatur wurden die Prüfplatten auf ihre optischen und mechanischen Eigenschaften getestet. Die Prüfergebnisse finden sich ebenfalls in Tabelle 2.

**Tabelle 2: optische und mechanische Eigenschaften der hergestellten Prüfplatten**

| **Beispiel** | **a-1):a-2)** | **1** | **2** | **3** | **4** | **5** | **6** | **7** | **Vgl. 1** | **Vgl. 2** | **Vgl. 3** | **Vgl. 4** | **Vgl. 5** | **Vgl. 6** | **Vgl. 7** |
|---|---|---|---|---|---|---|---|---|---|---|---|---|---|---|---|
| Polyisocyanat A-I | 20:80 | 62,2 | - | 54,3 | - | - | - | - | - | - | - | - | - | - | - |
| Polyisocyanat A-II | 30:70 | - | 62,9 | - | - | - | - | - | - | - | - | - | - | - | - |
| Polyisocyanat A-III | 50:50 | - | - | - | 53,4 | - | - | - | - | - | - | - | - | - | - |
| Polyisocyanat A-IV | 30:70 | - | - | - | - | 55,4 | - | - | - | - | - | - | - | - | - |
| Polyisocyanat A-V | 20:80 | - | - | - | - | - | 62,5 | - | - | - | - | - | - | - | - |
| Polyisocyanat A-VI | 20:80 | - | - | - | - | - | - | 58,5 | - | - | - | - | - | - | - |
| Polyisocyanat A-VII | 55:45 | - | - | - | - | - | - | - | 64,2 | - | - | - | - | - | - |
| Polyisocyanat a2 -!) | 0:100 | - | - | - | - | - | - | - | - | 61,0 | 58,2 | - | - | - | - |
| Polyisocyanat A-VIII | | - | - | - | - | - | - | - | - | - | - | - | 57,3 | - | - |
| Polyisocyanat A-IX | | - | - | - | - | - | - | - | - | - | - | - | - | 58,9 | - |
| Polyisocyanat A-X | | - | - | - | - | - | - | - | - | - | - | - | - | - | 54,6 |
| m-Xylylendiisocyanat | | - | - | - | - | - | - | - | - | - | - | 43,6 | - | - | - |
| Polythiol B1) | | 37,8 | 37,1 | - | - | - | 37,5 | - | 35,8 | 39,0 | 25,1 | - | 42,7 | 41,1 | 45,7 |
| Polythiol B2) | | - | - | 45,7 | - | - | - | 41,5 | - | - | 16,7 | 56,4 | - | - | - |
| Polythiol B3) | | - | - | - | 46.6 | - | - | - | - | - | - | - | - | - | - |
| Polythiol B4) | | - | - | - | - | 44,6 | - | - | - | - | - | - | - | - | - |
| Dichte [g/cm³] | | 1,234 | 1,239 | 1,247 | 1,243 | 1,220 | 1,204 | 1,246 | 1,247 | 1,240 | 1,233 | 1,370 | 1,242 | 1,237 | 1,245 |
| Shore-Härte D | | 86 | 84 | 85 | 85 | 87 | 83 | 88 | 79 | 87 | 86 | 78 | 82 | 87 | n. b. |
| Tg [°C] | | 136 | 136 | 139 | 108 | 115 | 133 | 140 | 97 | 144 | 120 | 90 | 96 | 113 | 80 |
| HDT [°C] | | 102 | 101 | 97 | 91 | 95 | 97 | n. b. | 55 | n. b. | n. b. | 74 | 71 | n. b. | n. b. |
| Brechungsindex | | 1,587 | 1,586 | 1,549 | 1,541 | 1,548 | 1,549 | 1,552 | 1,583 | 1,586 | 1,573 | 1,597 | 1,591 | 1,586 | 1,598 |
| Abbe-Zahl | | 41 | 42 | 40 | 42 | 49 | 49 | 42 | 42 | 39 | 38 | 36 | 42 | 42 | 37 |
| Transmission [%] | | 92,4 | 91,1 | 92,6 | 91,3 | 91,2 | 92,4 | 91,9 | 91,8 | 91,1 | 91,3 | 92,3 | 92,1 | 91,1 | 92,8 |

Wie die Beispiele zeigen, liefern die erfindungsgemäßen Polythiourethansysteme harte, hochtransparente Kunststoffe, die sich durch hohe Brechungsindices und hohe Abbe-Zahlen bei gleichzeitig hohen Glasübergangstemperaturen und Wärmeformbeständigkeiten auszeichnen. Die zum Vergleich unter Verwendung einer mehr als erfindungsgemäß beanspruchten Menge an HDI-Polyisocyanat aufweisenden Komponente a-1) (Vgl. 1) hergestellte Prüfplatte, weist eine unzureichende Glasübergangstemperatur und Wärmeformbeständigkeit auf. Damit ist das entstandene Material für die Herstellung von Brillengläsern weniger geeignet. Unter Verwendung einer ausschließlich auf IPDI basierenden Komponente a-2) hergestellte Prüfplatten (Vgl. 2 und 3) waren dagegen extrem spröde und zerbrachen beim Entformen. Die Verwendung eines araliphatischen Diisocyanates (m-XDI) als Vernetzerkomponente (Vgl. 4) führt zwar ebenfalls zu einem hoch lichtbrechenden Polythiourethan, das neben einer vergleichsweise niedrigen Wärmeformbeständigkeit insbesondere eine starke optische Dispersion (niedrige Abbe-Zahl) aufweist.

Die Verwendung einer Polyisocyanatkomponente, die neben einem oligomeren HDI-Polyisocyanat ausschließlich monomeres IPDI enthält (Vgl. 5), führt zu einem Polythiourethan mit einer unzureichenden Glasübergangstemperatur und Wärmeformbeständigkeit.

Die unter Verwendung von außschließlich monomerem HDI hergestellten Materialien (Vgl. 6 und 7) waren nicht ausreichend elastisch, sondern spröde und zerbrachen beim Entformen. Dabei war das ausschließlich auf monomeren Diisocyanaten basierende Prüfmuster (Vgl. 7) am Ende der gewählten Aushärtezeit (8 Stunden / 100°C) an der Oberfläche noch leicht klebrig, was auf eine unvollständige Vernetzung hindeutet.

Damit sind diese Vergleichsmaterialien der Versuche Vgl. 1 bis Vgl. 7 für die Herstellung von Brillengläsern weniger geeignet.

### Beispiel 8 (Herstellung eines Brillenglasrohlings)

Polyisocyanat A-I wurde mit 0,16 % Zelec® UN (saures Phosphatester-Trennmittel, Stepan Company, Northfield, IL, USA) sowie 0,5 % Tinuvin® 326 (UV-Schutzmittel, BASF Schweiz AG, Basel) versetzt und zur Entgasung bei 60°C und 40 mbar ca. 3 Stunden bis zum sichtbaren Ende der Schaumbildung gerührt. Polythiol B1) wurde auf die gleiche Weise ebenfalls entgast.

Nach Abkühlen auf Raumtemperatur wurden 62,6 Gew.-Teile des so vorbehandelten additivierten Polyisocyanats A-I mit 37,4 Gew.-Teilen des entgasten Polythiols B1), entsprechend einem Äquivalentverhältnis von Isocyanatgruppen zu gegenüber Isocyanatgruppen reaktiven Gruppen von 1 : 1, in einem Rührgefäß gemischt und 30 min unter Vakuum (ca. 150 mbar) gerührt. Anschließend wurde das Reaktionsgemisch durch Beaufschlagung des Rührgefäßes mit einem Stickstoffüberdruck über eine mit einem Hahn versehene Leitung durch ein 0,5 µm PTFE-Filter in eine gereinigte, aus zwei gläsernen Formschalen und einem polymeren Dichtring bestehende Gießform für einen Brillenglasrohling (Durchmesser 75 mm, Dicke 10 mm, -2 Dioptrien) gefördert. Die Gießform wurde in einem Wärmeschrank 2 Stunden bei 60°C gehalten, danach innerhalb von 3 Stunden kontinuierlich bis auf 115°C erwärmt und schließlich weitere 2 Stunden bei dieser Temperatur gehalten. Nach Abkühlen auf Raumtemperatur wurde der ausgehärtete Gießling von den Formschalen getrennt und zum Abbau von Materialspannungen für 3 Stunden bei 130°C nachgetempert.

Auf diese Weise wurde ein völlig klarer, transparenter und schlierenfreier Brillenglasrohling erhalten, der die in Beispiel 1 genannten optischen und mechanischen Eigenschaften zeigte. Die Transmission betrug bei einer Wellenlänge von 390 nm < 1 %, bei 400 nm 3 %, bei 410 nm 53 % und im Bereich oberhalb 450 nm 92 %.

## Patentansprüche

1. Verwendung einer Zusammensetzung, enthaltend
A) 10 bis 50 Gew.-% mindestens eines Polyisocyanates a-1) auf Basis von Hexamethylendiisocyanat, enthaltend mindestens ein oligomeres Polyisocyanat auf Basis von Hexamethylendiisocyanat und wahlweise monomeres Hexamethylendiisocyanat
und
50 bis 90 Gew.-% mindestens eines Polyisocyanates a-2) auf Basis von Isophorondiisocyanat, enthaltend mindestens ein oligomeres Polyisocyanat auf Basis von Isophorondiisocyanat und wahlweise monomeres Isophorondiisocyanat,
mit der Maßgabe, dass
das Polyisocyanat a-1) monomeres Hexamethylendiisocyanat enthält, oder
das Polyisocyanat a-2) monomeres Isophorondiisocyanat enthält, oder das Polyisocyanat a-1) monomeres Hexamethylendiisocyanat enthält und das Polyisocyanat a-2) monomeres Isophorondiisocyanat enthält,
wobei die %-Angaben auf die Summe der Komponenten a-1) und a-2) bezogen sind,
B) mindestens eine Schwefel enthaltende Komponente sowie gegebenenfalls
C) ein oder mehrere Hilfs- und/oder Zusatzmittel
zur Herstellung einer optischen Linse,

2. Verwendung nach Anspruch 1, **dadurch gekennzeichnet, dass** die optische Linse ein Brillenglas ist.

3. Zusammensetzung, enthaltend
A) 10 bis 50 Gew.-% mindestens eines oligomeren Polyisocyanates a-1') auf Basis von Hexamethylendiisocyanat,
und
50 bis 90 Gew.-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat, worin, bezogen auf die Masse, die Menge des monomeren Isophorondiisocyanates größer als die Menge des oligomeren Polyisocyanates auf Basis von Isophorondiisocyanat ist,
wobei die %-Angaben auf die Summe der Komponenten a-1') und a-2) bezogen sind,
B) mindestens eine Schwefel enthaltende Komponente sowie gegebenenfalls
C) ein oder mehrere Hilfs- und/oder Zusatzmittel.

4. Zusammensetzung, nach Anspruch 3, enthaltend
A) 10 bis 50 Gew.-% mindestens eines oligomeren Polyisocyanates a-1') auf Basis von Hexamethylendiisocyanat, enthaltend weniger als 0,5 Gew.-% monomeres HDI bezogen auf die gesamte Polyisocyanatkomponente a-1'),
und
50 bis 90 Gew.-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat, worin, bezogen auf die Masse, die Menge des monomeren Isophorondiisocyanates größer als die Menge des oligomeren Polyisocyanates auf Basis von Isophorondiisocyanat ist,
wobei die %-Angaben auf die Summe der Komponenten a-1') und a-2) bezogen sind,
B) mindestens eine Schwefel enthaltende Komponente sowie gegebenenfalls
C) ein oder mehrere Hilfs- und/oder Zusatzmittel.

5. Zusammensetzung nach Anspruch 3 oder 4, **dadurch gekennzeichnet, dass** die Schwefel enthaltende Komponente ausgewählt wird aus der Gruppe, bestehend aus Polythiolen, Schwefel enthaltende Hydroxyverbindungen und Mischungen davon.

6. Zusammensetzung nach einem der Ansprüche 3 bis 5, **dadurch gekennzeichnet, dass** die Schwefel enthaltende Komponente ein Molekulargewicht von 78 bis 1000 g/mol aufweist.

7. Zusammensetzung nach einem der Ansprüche 3 bis 6, **dadurch gekennzeichnet, dass** mindestens ein Hilfs- und/oder Zusatzmittel C), ausgewählt aus der Gruppe, bestehend aus UV-Stabilisatoren, Katalysatoren, Antioxidantien, Formtrennmittel, Farbstoffen und Mischungen daraus verwendet wird.

8. Kit-of-parts umfassend die Komponenten A) und B) wie in den Ansprüchen 3 bis 7 definiert in räumlich getrennter Anordnung.

9. Verwendung der Zusammensetzung nach einem der Ansprüche 3 bis 7 zur Herstellung von Polythiourethanen,

10. Verwendung nach Anspruch 9 zur Herstellung transparenter Materialien,

11. Verwendung nach Anspruch 10 zur Herstellung transparenter Formkörper.

12. Verwendung nach Anspruch 11, **dadurch gekennzeichnet, dass** der transparente Formkörper eine optische Linse ist.

13. Verwendung nach Anspruch 12, **dadurch gekennzeichnet, dass** die optische Linse ein Brillenglas ist.

14. Polythiourethan, erhalten durch Härtung der Zusammensetzung nach einem der Ansprüche 3 bis 7.

15. Optische Linse, erhalten unter Verwendung der Zusammensetzung nach einem der Ansprüche 3 bis 7.

16. Verfahren zur Herstellung transparenter Materialien durch Härtung der Zusammensetzung nach einem der Ansprüche 3 bis 7.

## Claims

1. Use of a composition comprising
A) 10 to 50 wt.% of at least one polyisocyanate a-1) based on hexamethylene diisocyanate, containing at least one oligomeric polyisocyanate based on hexamethylene diisocyanate and optionally monomeric hexamethylene diisocyanate
and
50 to 90 wt.% of at least one polyisocyanate a-2) based on isophorone diisocyanate, containing at least one oligomeric polyisocyanate based on isophorone diisocyanate and optionally monomeric isophorone diisocyanate, provided that
the polyisocyanate a-1) contains monomeric hexamethylene diisocyanate, or the polyisocyanate a-2) contains monomeric isophorone diisocyanate, or
the polyisocyanate a-1) contains monomeric hexamethylene diisocyanate and the polyisocyanate a-2) contains monomeric isophorone diisocyanate, wherein the %-values relate to the sum of the components a-1) and a-2),
B) at least one sulphur-containing component
and optionally
C) one or more auxiliaries and/or additives
for the manufacture of an optical lens.

2. The use according to claim 1, **characterized in that** the optical lens is a spectacle lens.

3. A composition comprising
A) 10 to 50 wt.% of at least one oligomeric polyisocyanate a-1') based on hexamethylene diisocyanate
and
50 to 90 wt.% of at least one polyisocyanate a-2) based on isophorone diisocyanate, containing monomeric isophorone diisocyanate and at least one oligomeric polyisocyanate based on isophorone diisocyanate, wherein, based on the mass, the amount of the monomeric isophorone diisocyanate is greater than the amount of the oligomeric polyisocyanate based on isophorone diisocyanate,
wherein the %-values relate to the sum of the components a-1') and a-2),
B) at least one sulphur-containing component
and optionally
C) one or more auxiliaries and/or additives.

4. The composition according to claim 3, comprising
A) 10 to 50 wt.% of at least one oligomeric polyisocyanate a-1') based on hexamethylene diisocyanate, containing less than 0.5 wt.% monomeric HDI based on the total polyisocyanate component a-1'),
and
50 to 90 wt.% of at least one polyisocyanate a-2) based on isophorone diisocyanate, containing monomeric isophorone diisocyanate and at least one oligomeric polyisocyanate based on isophorone diisocyanate, wherein, based on the mass, the amount of the monomeric isophorone diisocyanate is greater than the amount of the oligomeric polyisocyanate based on isophorone diisocyanate,
wherein the %-values relate to the sum of the components a-1') and a-2),
B) at least one sulphur-containing component
and optionally
C) one or more auxiliary and/or additive substances.

5. The composition according to claim 3 or 4, **characterized in that** the sulphur-containing component is selected from the group consisting of of polythiols, sulphur-containing hydroxy compounds and mixtures thereof.

6. The composition according to any one of claims 3 to 5, **characterized in that** the sulphur-containing component has a molecular weight of 78 to 1000 g/mol.

7. The composition according to any one of claims 3 to 6, **characterized in that** at least one auxiliary and/or additive C) selected from the group consisting of UV stabilizers, catalysts, antioxidants, mold release agents, dyes and mixtures thereof is used.

8. Kit-of-parts comprising components A) and B) as defined in claims 3 to 7 in spatially separated arrangement.

9. Use of the composition according to any one of claims 3 to 7 for the production of polylthiourethanes.

10. Use according to claim 9 for the production of transparent materials.

11. Use according to claim 10 for the production of transparent moulded articles.

12. Use according to claim 11, **characterized in that** the transparent moulded article is an optical lens.

13. Use according to claim 12, **characterized in that** the optical lens is a spectacle lens.

14. A polythiourethane obtained by curing the composition according to any one of claims 3 to 7.

15. An optical lens obtained by using the composition according to any one of claims 3 to 7.

16. A process for producing transparent materials by curing the composition according to any one of claims 3 to 7.

## Revendications

1. Utilisation d'une composition, contenant
A) 10 à 50 % en poids d'au moins un polyisocyanate a-1) sur la base de diisocyanate d'hexaméthylène, contenant au moins un polyisocyanate oligomère sur la base de diisocyanate d'hexaméthylène et sélectivement du diisocyanate d'hexaméthylène monomère
et
50 à 60 % en poids d'au moins un polyisocyanate a-2) sur la base de diisocyanate d'isophorone, contenant au moins un polyisocyanate oligomère sur la base de diisocyanate d'isophorone et sélectivement du diisocyanate d'isophorone monomère,
à condition que
le polyisocyanate a-1) contienne du diisocyanate d'hexaméthylène monomère ou
le polyisocyanate a-2) contienne du diisocyanate d'isophorone monomère ou
le polyisocyanate a-1) contienne du diisocyanate d'hexaméthylène monomère et le polyisocyanate a-2) contienne du diisocyanate d'isophorone monomère,
les valeurs en pourcentage se référant à la somme des composants a-1) et a-2),
B) au moins un composant contenant du soufre
ainsi que, le cas échéant,
C) un ou plusieurs adjuvant(s) et/ou additif(s)
pour fabriquer une lentille optique.

2. Utilisation selon la revendication 1, **caractérisée en ce que** la lentille optique est un verre ophtalmique.

3. Composition, contenant :
A) 10 à 50 % en poids d'au moins un polyisocyanate oligomère a-1) sur la base de diisocyanate d'hexaméthylène,
et
50 à 60 % en poids d'au moins un polyisocyanate a-2) sur la base de diisocyanate d'isophorone, contenant au moins du diisocyanate d'isophorone monomère et au moins un polyisocyanate oligomère sur la base de diisocyanate d'isophorone, dans lequel, par rapport à la masse, la quantité du diisocyanate d'isophorone monomère est plus grande que la quantité du polyisocyanate oligomère sur la base de diisocyanate d'isophorone,
les valeurs en pourcentage se référant à la somme des composants a-1) et a-2),
B) au moins un composant contenant du soufre
ainsi que, le cas échéant,
C) un ou plusieurs adjuvant(s) et/ou additif(s).

4. Composition selon la revendication 3, contenant :
A) 10 à 50 % en poids d'au moins un polyisocyanate oligomère a-1) sur la base de diisocyanate d'hexaméthylène, contenant moins de 0,5 % en poids de HDI monomère par rapport au composant entier de polyisocyanate a-1),
et
50 à 60 % en poids d'au moins un polyisocyanate a-2) sur la base de diisocyanate d'isophorone, contenant au moins du diisocyanate d'isophorone monomère et au moins un polyisocyanate oligomère sur la base de diisocyanate d'isophorone, dans lequel, par rapport à la masse, la quantité du diisocyanate d'isophorone monomère est plus grande que la quantité du polyisocyanate oligomère sur la base de diisocyanate d'isophorone,
les valeurs en pourcentage se référant à la somme des composants a-1) et a-2),
B) au moins un composant contenant du soufre
ainsi que, le cas échéant,
C) un ou plusieurs adjuvant(s) et/ou additif(s).

5. Composition selon la revendication 3 ou la revendication 4, **caractérisée en ce que** le composant contenant du soufre est sélectionné dans le groupe composé de polythioles, de composés hydroxylés contenant du soufre et de mélanges de ceux-ci.

6. Composition selon l'une des revendications 3 à 5, **caractérisée en ce que** le composant contenant du soufre comprend un poids moléculaire comprise entre 78 et 1000 g/mol.

7. Composition selon l'une des revendications 3 à 6, **caractérisée en ce qu'**au moins un adjuvant et/ou un additif C) est sélectionné dans le groupe composé de stabilisateurs UV, de catalyseurs, d'antioxydants, d'agents de démoulage, de colorants et de mélanges de ceux-ci.

8. Kit-of parts comprenant les composants A) et B), tels que définis dans les revendications 3 à 7, disposés de manière spatialement séparés.

9. Utilisation de la composition selon l'une des revendications 3 à 7 pour fabriquer des polythiouréthanes.

10. Utilisation selon la revendication 9 pour fabriquer des matériaux transparents.

11. Utilisation selon la revendication 10 pour fabriquer des corps moulés transparents.

12. Utilisation selon la revendication 11, **caractérisée en ce que** le corps moulé transparent est une lentille optique.

13. Utilisation selon la revendication 12, **caractérisée en ce que** la lentille optique est un verre ophtalmique.

14. Polyuréthane obtenue par le durcissement de la composition selon l'une des revendications 3 à 7.

15. Lentille optique obtenue en utilisant la composition selon l'une des revendications 3 à 7.

16. Procédé de fabrication de matériaux transparents par moyen de durcissement de la composition selon l'une des revendications 3 à 7.
